# EUROPEAN PATENT APPLICATION

(11) **EP 1 262 809 A1**
(43) Date of publication of application: **04.12.2002**
(21) Application number: 01830333.9
(22) Date of filing: 23.05.2001
(51) Int. Cl.: G02B 6/50, G02B 6/52, H02G 9/06, F16L 7/00, F16L 55/165

(54) **Apparatus for cables laying and conduits renovation and methods of its fabrication and installation**

(71) Applicant: S3 Soncini S.r.l., 42028 Poviglio (Reggio Emilia) (IT)
(72) Inventor: Soncini, Gianni, 42028 Poviglio (Reggio Emilia) (IT)
(74) Representative: Provvisionato, Paolo

(57) **Abstract**

An improved product for laying cables and renovating conduits comprises a flexible lining element (1) with a tubular form, elongated along one preferential direction and defining a closed space therein. The lining (1) comprises at least one layer of impermeable material (6), at least one layer of porous material (4) and at least one layer of reinforcement material (2). An elongated pocket (7) is tied with the flexible lining (1), which is reversible during its laying action.

## Description

The present invention relates to the field of laying underground cables and especially to the field of laying underground cables and concurrent renovating of sewer conduits.

Recent and very fast developments in the field of telecommunication, along with an increasingly strong demand for more services, have resulted into an urgent requirement for adapting the existing transmission means. In particular, the requirement for faster data communications speed within cabled telecommunications has lead to the replacement of the existing transmission nets with more suitable transmission means as, for example, the optical fibres.

Additionally, new communication service providers are looking for new independent communications nets to set their business free from the present nets controlled by former service providers.

Carrying out, adapting and developing a cable transmission network necessarily requires the laying of a very high number of cables, and this is one of the major operation problems of this field up to now.

Several solutions for underground laying of communications cables are known, from digging the ground out and laying a protection lining for fitting the cables in, to using automatic devices for fixing the cables on the upper portion of an existing sewer conduit.

However, all the solutions presently in use, included the above mentioned ones, have several drawbacks as, for example, traffic problems, risks of damaging architectural structures in hold town centre, wear and disruption of the street blanket, very long time to complete the job, high complexity, less reliability and shorter life, as well as poor performance.

Patent application WO 00/06843, in the name of Prusate Foundation, shows a method and a device for laying data cables in public conduits, normally used for gas, water, black and slurry waters, and for the concurrent renovation thereof. In particular, the Prusate application discloses a semi-stiff lining slipped inside the sewer and then inflated to expand against the existing walls and so renovating possible surface damages in the sewer walls. The thickness of this semi-stiff lining is designed to accommodate an additional channel where various data communications cables, as, for example, optical fibres or coaxial cable, can be slipped in.

One of the main disadvantages of this system is that inserting the lining inside the existing sewer can be a quite difficult task as well as making it adhere to the walls. In order to assure suitable protection of the communications cables, the channel that is obtained inside the lining thickness is very stiff or rather very little flexible. This requires the lining to be inserted in the sewer in a roll form and then pushed on one end while pulled on the other one in order to allow a complete laying inside the sewer conduct. This task often causes a heavy stress on the lining material such that tearing, ripping or structural weakening of the material may sometime happen. Moreover, if the existing sewer walls are very rough and/or affected by sectional variations, pulling and pushing the lining will not result into a uniform and even laying of the lining itself.

Another disadvantage of this system, which is well known to the applicant, is that the semi-stiff channel hosting transmission data requires a greater lining thickness and consequently a reduction of sewer capacity in terms of liquid/gas flow volume inside the sewer, and therefore a less flow efficiency thereof. Furthermore, if the existing sewer or the required channel have a large-size diameter, the semi-stiff lining thickness must be increased, increasing the above mentioned disadvantages consequently.

Another known solution is although strictly concerning with sewer renovation only. This system makes use of a lining bag comprising a glass fibre layer and a polyurethane sheet in a sandwich formation. In the middle there is a polyester felt impregnated with thermal curing resin. The finished lining has a very thin thickness and can be inserted in the existing sewer without significantly affecting the flow capacity.

The main object of the present invention is to provide a solution to the above mentioned drawbacks, providing a product suitable for renovating badly damaged conduits, and, at the same time, for laying channels for the passage of data transmission cables.

Another object of the invention is to provide an improved product for laying cables and renovating conduits which is at the same time easy to use, economical and highly resistant even over long term operation.

In order to fulfil the aims indicated above, the subject of the invention is an improved product for laying cables and renovating conduits as defined in the following claims.

One of the main advantages of this invention is that the product used for conduit renovation assures top flow capacity inside the renovated conduit, without cable channels affecting or reducing the liquid volume flow.

Another advantage is that this system can easily handle both renovation of the existing conduit and laying of communications cables in one effort and with no additional costs.

A further advantage of the present invention is the type of materials used for the renovating conduit product, which is exceptionally flexible and resilient. This allows insertion inside existing conduits by means of the so called "inversion" technique assuring, as clarified in the following pages, further advantages and better performance.

An additional advantage is that the channels for the passage of communications cables can be used both during and after conduits renovation laying.

Further characteristics and advantages will become clear from the following description of a preferred embodiment with reference to the appended drawings, provided by way of nonlimiting example, in which:
- Figure 1 is schematic cross sectional view of the improved product of the present invention during one of the manufacturing steps;
- Figure 2 is a schematic view of the improved product of Figure 1 in one of the working positions inside a conduit;
- Figures 3a, 3b and 3c are partial cross section views of some embodiments of this invention in a working position;
- Figure 4 is a partial cross section view of a further embodiment of this invention in a working position;
- Figure 5 is a section view of a conduit during a working position of this invention; and
- Figures 6 and 7 are section views of manholes on a conduit line using the improved product of this invention.

Referring now to the Figures, an improved product for laying cables and renovating conduits comprises a tubular flexible element, as, for example, a lining braiding 1. The lining braiding 1 comprises a plurality of layers among which, generally, but not necessarily, a sheet of reinforcement compound material, for example, but not limited to, a material with fibres orientated in desired directions, preferably glass fibre 2, a sheet of porous material with casual fibres orientation in all directions, as, for example, but not limited to, polyester, preferably polyester needle felt 4, and an impermeable sheet, for example, but not limited to, a polymeric material comprising a urethane group, preferably polyurethane 6. The lining braiding 1 has substantially the same diameter as the inside conduit diameter and roughly equals the length of the existing conduit section.

According to a first embodiment of the present invention, the lining braiding 1 comprises a glass fibre sheet 2 overlapped on a needle felt sheet 4 and on a polyurethane sheet 6, so that the needle felt 4 is laying between the other two sheets 2, 6. The lining braiding 1 also comprises an elongated pocket 7, laying between the polyurethane sheet 6 and the needle felt sheet 4, made out of, for example, but not limited to, needle felt and with a tubular form. The pocket 7 substantially extends throughout the whole length of the lining braiding 1. A flexible tubular element, for example, but not limited to, a polythene pipe 8 is located inside the tubular pocket 7. The pipe 8, as explained below, is intended for housing data transmission cables.

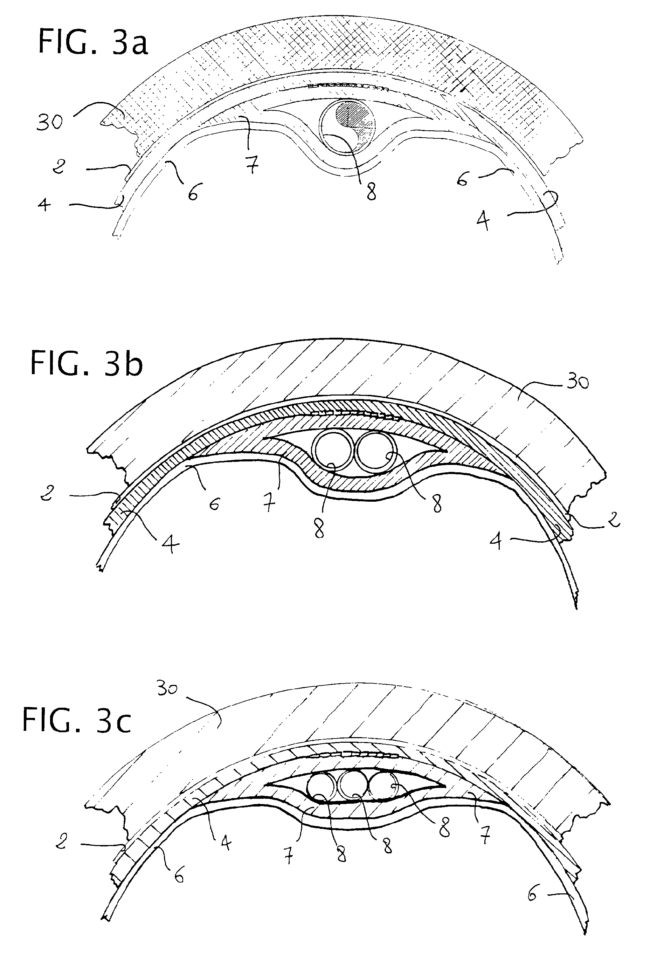

Naturally, the elongated pocket 7 may house directly the communications cables or, as shown in Figures 3b e 3c, may house two, three or more flexible pipes 8 to keep more sets of cables separated from each other.

A further advantage of the present invention is that, when laying a plurality of flexible pipes 8, it is possible to arrange the elongated pocket 7 in order to house and to keep sets of cables separate and independent each other. Thus, different service providers may place their individual cables inside the product of the present invention with no risk for them to interfere, during the management or in use, with the cables of different providers.

In order to manufacture a lining braiding 1 according to the above mentioned embodiment, a glass fibre sheet 2 and a needle felt sheet 4 are arranged and folded until their respective longitudinal ends are closed enough to be fixed together, for example, but not limited to, by welding so as each forms a tubular element.

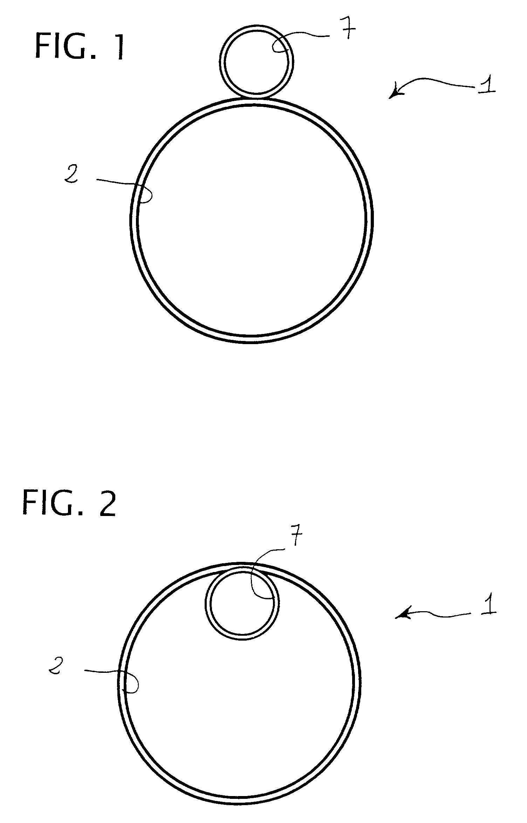

A tubular pocket 7 is laid on a polyurethane sheet 6 and a needle felt tubular element 4 is then attached on the tubular pocket 7 by means, for example, but not limited to, of glue spots 9. Then, the glass fibre tubular element 2 is laid on the needle felt tubular element 4, and the polyurethane sheet 6 is folded in such a way to contain them both, and form a multi-layer structure similar to the one shown in Fig. 3a, but with the polyurethane sheet 6 and the glass fibre sheet 2 in opposite positions, i.e. the polyurethane sheet 6 disposed outside said multi-layer structure. As shown in Figure 1, in this step the tubular pocket 7 is positioned outside the multi-layer glass fibre sheet 2 and the needle felt sheet 4. The lining braiding 1 is finally closed on one end, for example, but not limited to, by means of welding.

Naturally, it is possible to provide tubular elements of more glass fibre 2 or needle felt 4 sheets, or to use two or more superposed polyurethane sheets 6 depending on the technical requirements and still pertaining to the scope on this invention.

The lining braiding 1 is impregnated with thermosetting materials as for example but not limited to, epoxy, or polyurethane or phenol resins injected between the polyurethane sheet 6 and the needle felt 4. At last, the lining braiding 1 is pressed down, normally, by means of a roller system running down the entire length in order to evenly spread the resin all over the above mentioned sheet.

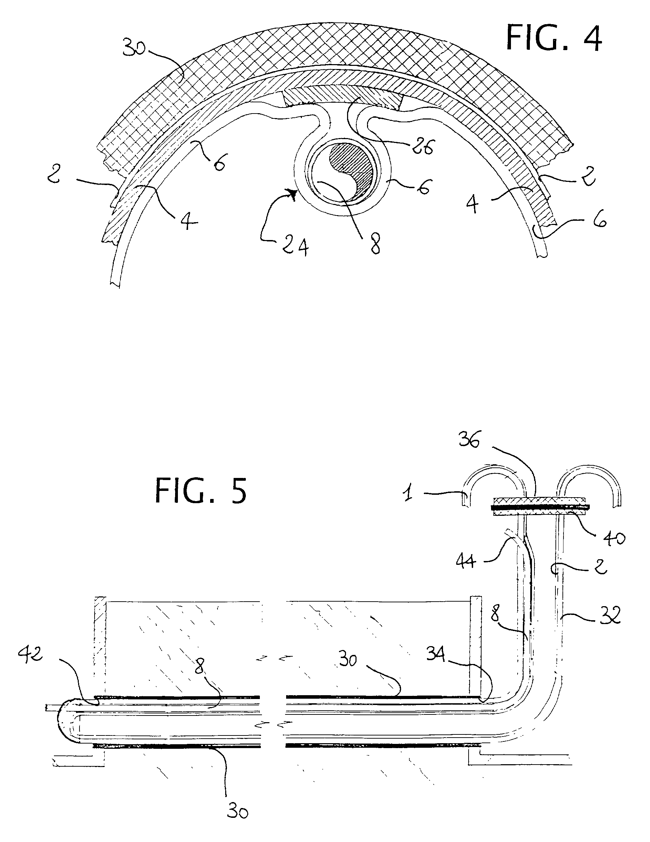

As shown in Figure 5, for renovating a damaged conduit or to laying transmission cables using the present invention, it is necessary to insert the lining braiding, manufactured according to the method above described, into the damaged section 30 of such conduit. Connecting elements, for example, but not limited to, a drop tube 32 made of plastic material may be used to perform this operation. The drop tube 32 shall provide a connection between the mouth 34 of the damaged conduit section 30 and a manhole 36 on the surface road level. A hanging element as for example, but not limited to, a metal ring 40 is then placed next to the manhole 36 on the drop tube 32 to provide the fixation of the open end of the lining braiding 1 with the drop tube 32. The lining braiding 1 is then forced by pressure inside the drop tube 32 and from there inside the conduit section 30. Since the open end of the lining braiding 1 is secured by the metal ring 40, the lining braiding 1 is forced to invert inside the drop tube 32 so that its interior surface, made out of the glass fibre sheet 2, is forced to adhere to the inner tube 32 surface.

In order to obtain an even laying of the lining braiding 1 inside the conduit section 30, and to improve its adhesion to the conduit 30 inner walls, a water head is applied in the drop tube 32 until the sealed end of the lining braiding 1 slips out the outlet 42 of the conduit 30.

In order to avoid a flat laying of the needle felt tubular pocket 7, and to prevent the polyurethane sheet 6 to flatten under the pressure of the water head flowing inside the lining braiding 1, the end 44 of the flexible pipe 8 is connected to a compressed air generator (not shown) next to the metal ring 40 introducing compressed air inside the flexible pipe 8. A pressure gauge, for example a manometer (not shown) can be connected at the opposite end of the pipe 8, in order to keep under control the pressure inside the flexible pipe 8 during all the laying steps of the lining braiding 1.

To complete the laying action, the water inside the lining braiding 1 laid in the conduit 30 is heated to polymerise the resin cures and to harden all the impregnated sheets comprised in the lining braiding 1. In this step it is also necessary to constantly monitor the pressure inside the flexible pipe 8 in order to prevent the pressure released by heating of the water inside the lining braiding 1 to alter the shape of the tubular pocket 7.

When the heating step is over, and after a cooling step, both ends of the lining braiding 1 and the flexible pipe 8 can be cut off close to the inlet mouth 34 and the outlet 42 of the conduit section 30 respectively.

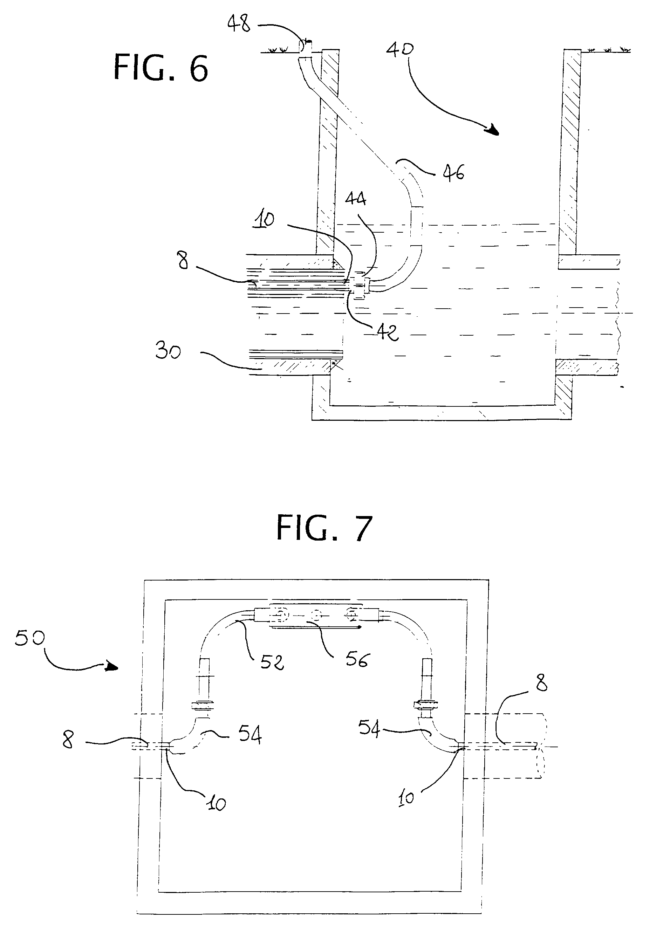

As shown in Figures 5 and 6, ends 10 of the flexible pipe 8 can be easily connected to channelling means inside a manhole 40, 50 respectively, in order to facilitate laying and maintenance of data transmission cables.

In particular, in case of an inspection manhole 40, i.e. a manhole which can be accessed from outside, the end 10 of the flexible pipe 8 is connected to an outlet duct 46 by means of linking means, for example, but not limited to, a threaded connector 42 and a mouth 44. This allows to lead the data transmission cables inside the flexible pipe 8 to an aboveground shunting box 48 through the duct 46, in order to facilitate their later use.

If the manhole is a by-pass manhole 50, the end 10 of the flexible pipe 8 can be connected to further connection pipes 52 by means, for example, of curve joints 54 fixed to the walls of the manhole 50. The connection pipes 52 may also comprise inspection and/or connections means 56 to allow and facilitate inspection and/or connection of the data transmission cables laying inside them.

The above mentioned channelling means 46, 54 should have preferably a curvilinear design with wide radius bends in order to improve passage and/or laying of the transmission cables, and to comply with applicable technical specifications of special transmissions means.

Naturally, the flexible pipe 8 and all the above mentioned channelling means may also accommodate, or may be arranged for a further accommodation, of electric cables, data transmission cables, ancillary water systems or any other channelling system.

According to a further embodiment of the present invention, shown in Figure 4, for manufacturing an improved product for laying cables and renovating conduits, three sheets, for example, but not limited to, of glass fibres 2, polyester needle felt 4 and polyurethane 6 respectively are provided. The sheets 2, 4, 6 are superposed so that the needle felt sheet 4 lays between the other two sheets 2, 6, and then folded to directly form a lining braiding 1. A portion 14 of the polyurethane sheet 6 is still further folded to obtain an elongated swelling 24 of substantially tubular form too, which extends substantially throughout the lining braiding 1 length and with a smaller diameter than the lining braiding 1. An additional needle felt strip 26 is inserted between the polyurethane sheet 6 and the needle felt sheet 4, near the limbs of the swelling 24, in order to support the fixation, for example, by means of welding spots 25, of the swelling 24 to the needle felt sheet 4. The strip 26 also improves a better adhesion and a greater stiffness of the whole multi-layer structure during the impregnation of the lining braiding 1.

Naturally, the principle of the invention remaining the same, the forms of embodiment and details of construction may be varied widely with respect to those described and shown, without thereby departing from the scope of the present invention.

## Claims

1. An improved product for laying cables and renovating conduits, comprising a flexible lining element (1) with a tubular form, elongated along one preferential direction and defining a closed space therein, the flexible lining (1) comprising at least one layer of impermeable material (6), at least one layer of porous material (4) and at least one layer of reinforcement material (2), **characterised in that** it further comprises an elongated pocket (7) tied with the flexible lining (1), the flexible lining (1) being reversible along said preferential direction.

2. An improved product according to claim 1, **characterised in that** the elongated pocket (7) is disposed internally to the flexible lining (1).

3. An improved product according to claim 2, **characterised in that** the elongated pocket (7) is defined by at least one layer of porous material (4).

4. An improved product according to claim 3, **characterised in that** the at least one layer of porous material (4) is to be impregnated with thermosetting material.

5. A process for manufacturing an improved product for laying cables and renovating conduits, as defined in any of the preceding claims, **characterised in that** it comprises the following steps:
- providing one or more tubular elements manufactured with sheets of reinforcement material (2);
- providing a tubular element manufactured with a sheet of porous material (4);
- providing an elongated pocket (7) manufactured with porous material, containing one or more flexible tubular elements (8) therein;
- providing a sheet of impermeable material (6);
- positioning the elongated pocket (7) upon the sheet of impermeable material (6);
- fixing the tubular element(4) of porous material upon the elongated pocket (7);
- positioning the one or more tubular elements (2) of reinforcement material upon the tubular element (4) of porous material;
- folding the sheet of impermeable material (6) to enclose all said elements, so as to form a single flexible lining element (1);
- impregnating the one or more sheets (4) of porous material with thermosetting material; and
- pressing the flexible lining element (1) in order to allow a uniform distribution of the thermosetting material.

6. A process for laying cables and renovating conduits by means of an improved product as defined in claims 1 to 4, **characterised in that** it comprises the following steps:
- providing a lining element (1);
- fixing one of the lining element ends on an inlet mouth (34) of a conduit (30);
- inserting the flexible lining element (1) inside the conduit (30) adhering its inner surface to the inner surface of the conduit (30);
- introducing a water head inside the inverted lining element (1) in order to allow the lining element (1) to stretch throughout the interior of the conduit (30);
- introducing inside the elongated pocket (7) a certain volume of compressed air;
- heating the water inside the lining element (1) up to a predetermined temperature, and maintaining said temperature for a predetermined period of time in order to polymerising the thermosetting material contained in the lining element (1); and
- removing the ends of both the lining element (1) and the elongated pocket (7).
